# FASCICULE DE BREVET EUROPEEN

(11) **EP 4 429 951 B1**
(45) Date de publication et mention de la délivrance du brevet: **02.12.2026**
(21) Numéro de dépôt: 22802216.6
(22) Date de dépôt: 13.10.2022
(51) Int. Cl.: B64U 10/25, B64U 10/60, B64U 70/90, B64F 3/02, F03D 5/00

(54) **PLATEFORME DE DECOLLAGE ET D'ATTERRISSAGE D'UN AERONEF POUR LA PRODUCTION D'ENERGIE ELECTRIQUE**
START- UND LANDEPLATTFORM EINES FLUGZEUGS ZUR ERZEUGUNG ELEKTRISCHER ENERGIE
AIRCRAFT TAKE-OFF AND LANDING PLATFORM FOR ELECTRIC POWER GENERATION

(30) Priorité: 10.11.2021 FR 2111971
(43) Date de publication de la demande: 18.09.2024
(73) Titulaire: Nantes Université, 44000 Nantes (FR); Estaca, 78180 Montigny-Le-Bretonneux (FR)
(72) Inventeur: CASARI, Pascal, 44600 SAINT NAZAIRE (FR); WALRICK, Jean Christophe, 53000 LAVAL (FR)
(74) Mandataire: Novagraaf Technologies
(86) Numéro de dépôt international: PCT/FR2022/051925
(87) Numéro de publication internationale: WO 2023/084167

(56) Documents cités:
- EP-A2- 2 218 642
- WO-A1-2008/015663
- KR-A- 20160 071 235
- US-A1- 2010 230 968
- US-A1- 2016 325 849
- US-B1- 10 800 547

## Description

### Domaine technique de l'invention

La présente invention concerne un système de production d'énergie électrique au moyen d'un aéronef. Plus particulièrement, l'invention concerne une plateforme de décollage et d'atterrissage de l'aéronef.

### Arrière-plan technique

Il est connu, notamment du document US 2010/230968 A1, de réaliser un système de production d'énergie électrique en utilisant un aéronef, appelé aussi « éolienne volante », qui est raccordé à une génératrice agencée au sol au moyen d'au moins une suspente ou un câble. Ce type de système permet d'accéder à des vents puissants et abondants qui soufflent en altitude.

La difficulté pour ce type de système est de pouvoir faire décoller et atterrir facilement l'aéronef, éventuellement de manière autonome, sans qu'il soit nécessaire de concevoir une structure complexe et coûteuse.

Dans un domaine technique plus éloigné, il est connu du document US 2016/325849 A1 une plateforme de lancement et de récupération d'un drone mettant en œuvre un filet agencé pour capturer le drone pendant le vol.

US 10800547 B1 divulgue également une plateforme de lancement et récupération appartenant à l'état de la technique.

L'invention propose une plateforme de décollage et d'atterrissage d'un aéronef intégrant une structure de réception de l'aéronef adaptée à la fois pour le décollage et l'atterrissage de l'aéronef et présentant un faible encombrement.

Ce système sera de faible encombrement et d'entretient facile pour être déployable dans des zones faiblement équipées en infrastructures

### Résumé de l'invention

L'invention propose une plateforme de décollage et d'atterrissage plateforme de décollage et d'atterrissage d'un aéronef pour la production d'énergie électrique au moyen d'une génératrice selon la revendication 1.

Ainsi l'invention propose une plateforme de décollage et d'atterrissage d'un aéronef sans moyens de propulsion, capable de décoller par la seule force du vent. La plateforme de décollage et d'atterrissage selon l'invention permet une mise en incidence de l'aéronef qui provoque suffisamment de portance pour permettre son décollage en vue de produire de l'énergie électrique grâce à la traction exercée par un câble sur une génératrice installée au sol. L'aéronef est capable d'atterrir alors que la génératrice devient motrice et rembobine le câble pour assurer à l'aéronef une vitesse de descente suffisante pour assurer le vol jusqu'à la plateforme.

Selon d'autres caractéristiques de la plateforme de décollage et d'atterrissage :
- la platine orientable est mobile en rotation autour d'un axe principal de rotation sensiblement vertical ;
- la plateforme comporte un socle inclinable qui porte la structure de réception et qui est monté pivotant par rapport à la platine orientable autour d'un axe de pivotement ;
- l'axe de pivotement est sensiblement transversal par rapport à l'axe principal de rotation ;
- le socle inclinable comporte un passage prévu pour le guidage d'une suspente prévue pour être raccordée à l'aéronef vers la génératrice ;
- le socle inclinable comporte :
   -- un corps principal comprenant le passage, et
   -- deux bras de maintien qui s'étendent depuis le corps principal vers la platine orientable et qui sont reliés à la platine orientable par l'axe de pivotement ;
- le corps principal du socle inclinable a une forme rectangulaire, et chaque branche de la structure de réception comporte une extrémité qui est fixée à un coin du corps principal ;
- les deux éléments élastiques sont tendus entre les deux branches d'une armature latérale, par exemple en forme de V, de C, ou de U ;
- la structure de réception comporte une armature principale fixée sur le socle inclinable et deux bras latéraux qui s'étendent du côté opposé au socle inclinable et qui forment ensemble une surface d'appui prévue pour supporter des ailes de l'aéronef dans une position de repos de l'aéronef. L'invention propose aussi un système de production d'énergie électrique comportant :
- un aéronef,
- une génératrice prévue pour produire de l'énergie électrique à partir des efforts appliqués par le vent sur l'aéronef via un câble,
- au moins une suspente prévue pour raccorder l'aéronef à la génératrice; caractérisé en ce qu'il comporte une plateforme de décollage et d'atterrissage selon l'une des caractéristiques précédentes.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue schématique en perspective d'un système de production d'énergie électrique équipé d'une plateforme de décollage et d'atterrissage d'un aéronef comprenant une structure de réception de l'aéronef selon un premier mode de réalisation ne relevant pas du champ des revendications, dans une position de repos de l'aéronef, l'aéronef étant cabré pour être prêt au décollage ;
[Fig.2] - la figure 2 est une vue en perspective du système de production d'énergie électrique de la figure 1, dans une position de décollage de l'aéronef où l'aéronef a décollé et exerce une force de traction sur le câble qui le relie à la plateforme de décollage afin d'entraîner un générateur placé au sol ;
[Fig.3] - la figure 3 est une vue en perspective du système de production d'énergie électrique de la figure 1, dans une position juste avant l'atterrissage de l'aéronef ;
[Fig.4] - la figure 4 est une vue en perspective similaire à celle de la figure 1 qui illustre un deuxième mode de réalisation du système selon l'invention lorsque l'aéronef est en position de repos ;
[Fig.5] - la figure 5 est une vue arrière qui représente schématiquement la structure de réception du système de la figure 4.

### Description détaillée de l'invention

Pour la description de l'invention et la compréhension des revendications, on adoptera à titre non limitatif et sans référence limitative à la gravité terrestre les orientations verticale, longitudinale et transversale selon le repère V, L, T indiqué aux figures dont les axes longitudinal L et transversal T s'étendent dans un plan horizontal.

Dans la description suivante, des éléments identiques, similaires ou analogues seront désignés par les mêmes références alphanumériques.

### Premier mode de réalisation

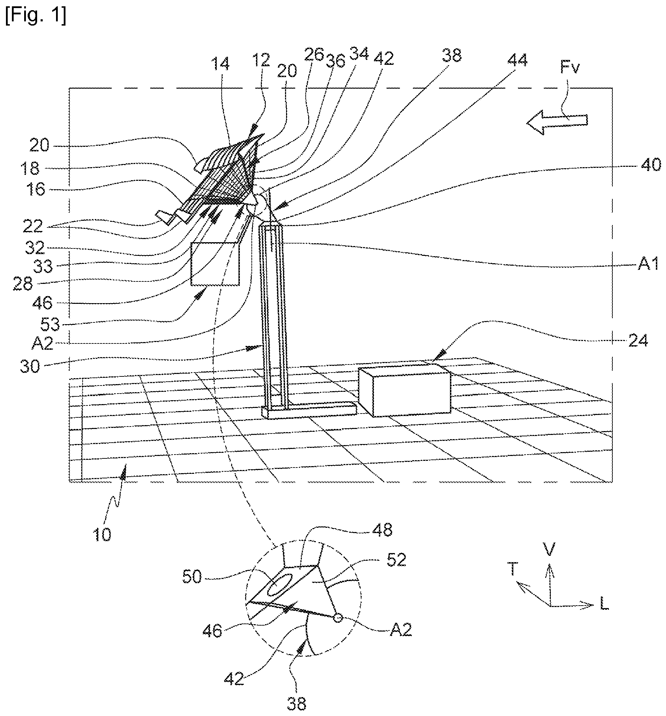

Les figures 1, 2 et 3 représentent un système 10 de production d'énergie électrique comportant :
- un aéronef 12,
- une génératrice 24 prévue pour produire de l'énergie électrique à partir des efforts appliqués par le vent sur l'aéronef 12,
- deux suspentes 26 prévues pour raccorder l'aéronef 12 à la génératrice 24, et
- une plateforme de décollage et d'atterrissage 28, ne relevant pas du champ des revendications.

L'aéronef 12 comporte une aile principale 14 et une aile secondaire 16, servant de stabilisateur, sensiblement planes, l'aile principale 14 ayant une envergure plus importante que l'aile secondaire 16. L'aile principale 14 et l'aile secondaire 16 sont chacune agencées dans un plan parallèle l'un par rapport à l'autre et elles sont reliées entre elles par une structure rigide 18. La structure rigide 18 comporte un ou deux barreaux agencés parallèlement l'un à l'autre et chacun relié en une première extrémité à l'aile principale 14 et en une deuxième extrémité à l'aile secondaire 16 de l'aéronef 12.

Tel que représenté aux figures à titre illustratif, les ailes 14, 16 sont agencées dans le même plan. De plus, deux ailerons avant 20 sont agencés de part et d'autre de l'aile principale 14 et deux ailerons arrière 22 sont agencés de part et d'autre de l'aile secondaire 16 de l'aéronef 12. Préférentiellement, les ailes 14, 16 de l'aéronef 12 sont réalisées dans un matériau rigide de faible coût avec un entretien et un déploiement faciles.

Avantageusement l'aéronef 12 est entièrement réalisé dans des matériaux rigides.

Les matériaux rigides utilisés pour la réalisation de l'aéronef sont par exemple du balsa, de la mousse, ou bien des matériaux composites. Chaque suspente 26 se présente sous la forme d'un câble relié en une première extrémité à la structure rigide 18 de l'aéronef 12 et relié en une deuxième extrémité à un câble principal assurant la liaison avec la génératrice 24 via la plateforme, entre un état enroulé et un état déployé de la suspente 26. Lors de la phase de vol captif de l'aéronef 12, les suspentes 26 sont dans un état déployé et en tension ce qui permet à la génératrice 24 de produire de l'énergie électrique.

Selon un exemple de réalisation représenté aux figures, le système 10 est équipé de deux suspentes 26 pour piloter l'aéronef 12 dans l'espace lors des phases de décollage, de vol et d'atterrissage.

Selon un autre exemple de réalisation non représenté, le système 10 est équipé d'une seule suspente 26. Dans ce cas, le pilotage de l'aéronef 12 dans l'espace s'effectue au moyen d'un organe de commande extérieur assurant un pilotage électronique de l'aéronef 12, par exemple en contrôlant la position de ses ailerons 20, 22.

La plateforme de décollage et d'atterrissage 28 comprend un support fixe 30 et une structure de réception 32 de l'aéronef 12 qui est prévue pour recevoir l'aéronef 12 et qui est reliée au support fixe 30.

Tel qu'illustré, le support fixe 30 est installé sur une surface plane pouvant également accueillir la génératrice 24. Il s'agit d'un pylône (treillis en aluminium) ou bien un poteau vertical dont sa hauteur est suffisamment importante afin de surélever l'aéronef 12 par rapport à la surface du sol.

Selon cet exemple de réalisation représenté sur les figures 1 à 3, la structure de réception 32 de l'aéronef 12 comporte un dispositif flexible 33 sous la forme d'un filet 34 perméable à l'air et quatre branches 36 prévues pour tendre le filet 34.

Selon un exemple de réalisation non représenté de la structure de réception 32, elle comporte un cadre sur lequel le bord du filet 34 est accroché et prévu pour tendre le filet 34.

Avantageusement, le filet 34 est réalisé dans un matériau textile tissé ou non tissé, comportant des mailles ajourées pour le passage de l'air à travers le filet 34.

Avantageusement, la structure de réception 32 comporte au moins un élément élastique non représenté prévu pour amortir l'atterrissage de l'aéronef 12 dans la structure de réception 32.

Selon un premier exemple de réalisation de la structure de réception 32, chaque élément élastique est agencé de manière à relier élastiquement une branche 36 avec le filet 34 de la structure de réception 32. Dans ce cas, l'élément élastique est par exemple une attache réalisée dans un matériau élastique tel que le caoutchouc.

Selon un deuxième exemple de réalisation de la structure de réception 32, chaque branche 36 de la structure de réception 32 a des propriétés élastiques de manière à être suffisamment flexible pour pouvoir fléchir lors de l'atterrissage de l'aéronef 12 dans la structure de réception 32.

La structure de réception 32 est montée pivotante autour d'un axe vertical V et d'un axe transversal T, correspondant à un axe principal A1 et un axe transversal A2, par rapport au support fixe 30 de manière à permettre le positionnement de la structure de réception 32 en fonction de l'orientation du vent et ainsi permettre le décollage ou bien l'atterrissage de l'aéronef 12. Le pivotement de la structure de réception 32 autour des axes A1, A2 permet également un état neutre si l'aéronef 12 doit rester au sol, par exemple par vent fort. Dans ce cas la structure de réception 32 maintient l'aéronef 12 à l'horizontal de manière à minimiser sa portance. La structure de réception 32 est orientée généralement comme une girouette, c'est-à-dire qu'elle suit la direction du vent Fv en étant libre à rotation selon l'axe principal A1.

Plus particulièrement, le pivotement de la structure de réception 32 est assuré par une platine orientable 38 reliée au support fixe 30 et mobile en rotation autour de l'axe principal A1 de rotation sensiblement vertical. L'axe principal A1 peut être légèrement incliné par rapport à la verticale, par exemple jusqu'à un angle de 10 ou 15 degrés. La platine orientable 38 comporte un tronçon inférieur 40 relié au support fixe 30, et un tronçon supérieur 42 relié au socle inclinable 46 via un élément de pivotement 44. La platine orientable 38 a une forme sensiblement trapézoïdale comportant un côté arrondi constituant le tronçon supérieur 42. La platine orientable 38 est agencée sur le support fixe 30 de manière à être incliné d'un certain angle par rapport à l'axe vertical pour empêcher un mauvais positionnement de l'aéronef 12 par apport au vent.

Le socle inclinable 46, qui peut être motorisé, porte la structure de réception 32 et est monté pivotant par rapport à la platine orientable 38 autour d'un axe de pivotement A2 sensiblement transversal par rapport à l'axe principal A1 de rotation. L'axe de pivotement A2 peut être légèrement incliné par rapport à une direction transversale T, par exemple jusqu'à un angle de 10 ou 15 degrés par rapport à la direction transversale T.

Le socle inclinable 46 comporte :
- un corps principal 48 comprenant un passage 50 prévu pour le guidage des suspentes 26,
- deux bras de maintien 52 qui s'étendent depuis le corps principal 48 vers la platine orientable 38 et qui sont reliés à la platine orientable 38 par l'axe de pivotement A2.

Le socle inclinable 46 a un débattement de pivotement délimité par rapport à l'axe de pivotement A2 de manière à bloquer la rotation du socle inclinable pour maintenir l'incidence de l'aéronef à un angle optimal par rapport à la direction du vent.

Selon un exemple de réalisation illustré aux figures, le corps principal 48 du socle inclinable 46 a une forme rectangulaire. Les bras de maintien 52 sont parallèles entre eux et sont sensiblement perpendiculaires au corps principal 48 du socle inclinable 46. Dans ce cas, chaque branche 36 de la structure de réception 32 comporte une extrémité qui est fixée à un coin du corps principal 48 du socle inclinable 46 et le filet 34 est tendu entre chaque paire de branches 36.

Avantageusement, un plan girouette 53, ici sous la forme d'une plaque longitudinale reliée à la platine orientable 38 permet de maintenir la platine orientable 38 et la structure de réception 32 en permanence dans l'axe du vent, même lors du vol de l'aéronef 12.

Tel qu'illustré à la figure 1, en position de repos de l'aéronef 12 dans la structure de réception 32 de la plateforme de décollage et d'atterrissage 28, l'aéronef 12 est posé dans le filet 34 et les suspentes 26 sont dans un état enroulé. L'aéronef 12 est ici dans une position cabrée pour être prêt au décollage, face à la direction du vent Fv.

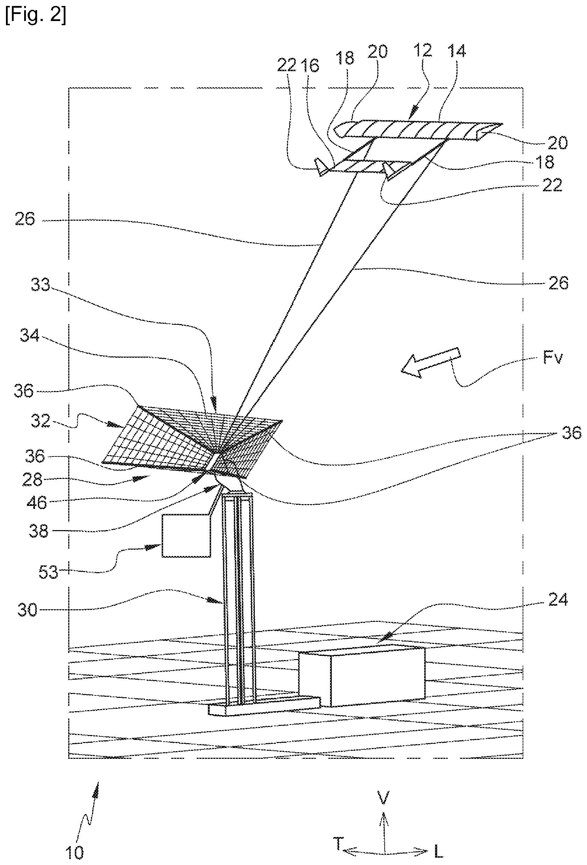

A la figure 2, en phase de décollage de l'aéronef 12 à partir de la structure de réception 32 de la plateforme de décollage et d'atterrissage 28, la structure de réception 32 est orientée au moyen de la platine orientable 38 et du socle inclinable 46 de manière à positionner l'aéronef 12 face au vent et provoquer son décollage. Lors de cette phase, le filet 34 est tendu et les suspentes 26 sont dans un état déroulé et elles sont tendues.

Pour atteindre la phase de vol de l'aéronef 12, l'aéronef 12 est piloté par les suspentes 26 de manière à atteindre une altitude élevée. Avantageusement, l'ascension de l'aéronef 12 s'effectue en formant des 8.

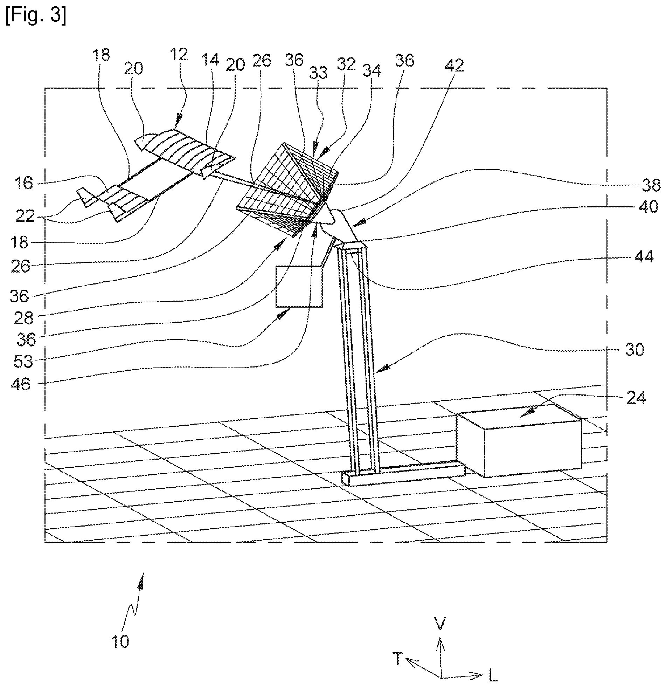

A la figure 3, en phase d'atterrissage de l'aéronef 12 vers la structure de réception 32 de la plateforme de décollage et d'atterrissage 28, la structure de réception 32 est orientée au moyen de la platine orientable 38 et du socle inclinable 46 de manière à provoquer l'atterrissage de l'aéronef 12 dans la structure de réception 32. Lors de cette phase, les suspentes 26 sont dans un état déroulé et elles sont tendues de manière à piloter l'aéronef 12 jusqu'à son atterrissage.

### Deuxième mode de réalisation

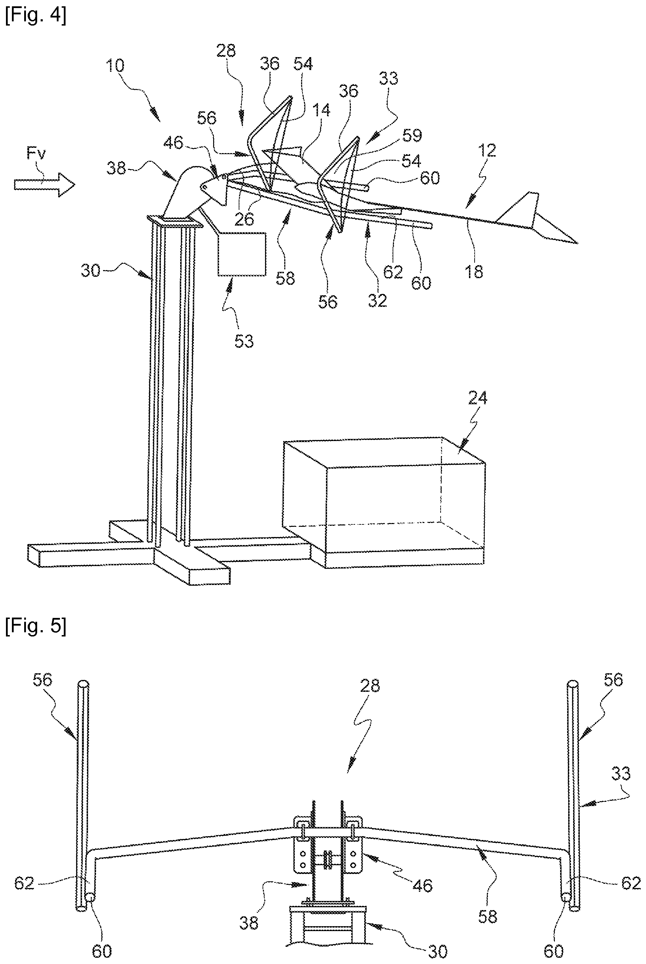

On décrit maintenant, en considérant les figures 4 et 5, un deuxième mode de réalisation du système 10 de production d'énergie électrique selon l'invention. Le système 10 est similaire à celui des figures 1 à 3 et il s'en distingue principalement par sa structure de réception 32.

Pour la description de ce deuxième mode de réalisation de l'invention, on insistera sur les différences et on ne décrira pas à nouveau les autres éléments qui composent le système, en particulier l'aéronef 12 et le support fixe 30.

Selon ce deuxième mode de réalisation, la structure de réception 32 utilise des éléments élastiques 54 tendus en remplacement du filet 34. Plus précisément, le dispositif élastique 33 équipant la structure de réception 32 comporte ici deux bandes 54, ou cordons, en matériau élastique qui sont fixées par chacune de leurs extrémités aux extrémités libres de deux armatures latérales 56.

Avantageusement, chaque armature latérale 56 a ici la forme d'un V, chaque élément élastique 54 étant tendu entre les deux branches 36 du V. Selon une variante de réalisation (non représentée), chaque armature latérale 56 pourrait avoir la forme d'un C ou d'un U compatible avec le décollage et l'atterrissage de l'aéronef 12.

L'aéronef 12 repose sur ces armatures latérales 56.

Les deux éléments élastiques 54 sont ainsi agencés de part et d'autre d'un plan médian vertical de la structure de réception 32 ce qui permet au dispositif élastique 33 d'amortir l'atterrissage de l'aéronef 12 dans la structure de réception 32. Grâce à leur forme en V, les armatures latérales 56 permettent de tendre l'élément élastique 54 en laissant un dégagement 59 entre les deux branches 36 pour la déformation élastique de l'élément élastique 54 lorsque l'aéronef 12 vient atterrir dans la structure de réception 32. Chaque élément élastique 54 constitue une butée souple pour que l'aéronef 12 ne percute pas l'armature rigide en phase d'accostage.

La structure de réception 32 comporte ici une armature principale 58 fixée sur le socle inclinable 46 qui se prolonge sur les côtés par deux bras latéraux 60. Les deux bras latéraux 60 s'étendent longitudinalement vers l'arrière de l'aéronef 12, du côté opposé au socle inclinable 46. Ces bras latéraux 60 forment ensemble une surface d'appui 62 prévue pour supporter chacun une partie de l'aile principale 14 de l'aéronef 12, lorsqu'il occupe sa position de repos.

### LEGENDE :

- 10 :: système
- 12 :: aéronef
- 14 :: aile principale
- 16 :: aile secondaire
- 18 :: structure rigide
- 20 :: aileron avant
- 22 :: aileron arrière
- 24 :: génératrice
- 26 :: suspente
- 28 :: plateforme de décollage et d'atterrissage
- 30 :: support fixe
- 32 :: structure de réception
- 33 :: dispositif flexible
- 34 :: filet
- 36 :: branche
- 38 :: platine orientable
- 40 :: tronçon inférieur
- 42 :: tronçon supérieur
- 44 :: élément de pivotement
- 46 :: socle inclinable
- 48 :: corps principal
- 50 :: passage
- 52 :: bras de maintien
- 53 :: plan girouette
- 54 :: élément élastique
- 56 :: armature latérale
- 58 :: armature principale
- 59 :: dégagement
- 60 :: bras latéral
- 62 :: surface d'appui
- A1 :: axe principal (vertical V)
- A2 :: axe de pivotement (transversal T)
- Fv :: direction du vent

## Revendications

1. Plateforme de décollage et d'atterrissage (28) d'un aéronef (12) pour la production d'énergie électrique au moyen d'une génératrice (24) et comprenant :
- un support fixe (30),
- une structure de réception (32) de l'aéronef (12) qui est prévue pour recevoir l'aéronef (12) et qui est reliée au support fixe (30) ;
dans laquelle la structure de réception (32) est montée pivotante par rapport au support fixe (30) au moyen d'une platine orientable (38) de manière à permettre le positionnement de la structure de réception (32) en fonction de l'orientation du vent, et la structure de réception (32) de l'aéronef (12) comporte un dispositif flexible (33) qui est tendu entre des branches (36) appartenant à la structure de réception (32), **caractérisée en ce que** ce dispositif flexible (33) comporte au moins deux éléments élastiques (54) tendus qui sont agencés de part et d'autre d'un plan médian vertical de la structure de réception (32) de manière à pouvoir amortir l'atterrissage de l'aéronef (12) dans la structure de réception (32).

2. Plateforme de décollage et d'atterrissage (28) selon la revendication 1, dans laquelle le dispositif flexible (33) est perméable à l'air.

3. Plateforme de décollage et d'atterrissage (28) selon la revendication 1 ou 2, **caractérisée en ce que** la platine orientable (38) est mobile en rotation autour d'un axe principal (A1) de rotation sensiblement vertical.

4. Plateforme de décollage et d'atterrissage (28) selon l'une quelconque des revendications précédentes, **caractérisée en ce qu'**elle comporte un socle inclinable (46) qui porte la structure de réception (32) et qui est monté pivotant par rapport à la platine orientable (38) autour d'un axe de pivotement (A2).

5. Plateforme de décollage et d'atterrissage (28) selon l'un quelconque des revendications précédentes en combinaison avec la revendication 4, **caractérisée en ce que** le socle inclinable (46) comporte un passage (50) prévu pour le guidage d'une suspente (26) prévue pour être raccordée à l'aéronef (12) vers la génératrice (24).

6. Plateforme de décollage et d'atterrissage (28) selon la revendication précédente, **caractérisée en ce que** le socle inclinable (46) comporte :
- un corps principal comprenant le passage (50), et
- deux bras de maintien qui s'étendent depuis le corps principal vers la platine orientable (38) et qui sont reliés à la platine orientable (38) par l'axe de pivotement (A2).

7. Plateforme de décollage et d'atterrissage (28) selon l'une quelconque des revendications précédentes prise en combinaison avec la revendication 4, **caractérisée en ce que** le corps principal (48) du socle inclinable (46) a une forme rectangulaire, et **en ce que** chaque branche (36) de la structure de réception (32) comporte une extrémité qui est fixée à un coin du corps principal (48).

8. Plateforme de décollage et d'atterrissage (28) selon la revendication 1, **caractérisée en ce que** les deux éléments élastiques (54) sont tendus entre les deux branches (36) d'une armature latérale (56), par exemple en forme de V, de C, ou de U.

9. Plateforme de décollage et d'atterrissage (28) selon l'une quelconque des revendications précédentes prise en combinaison avec la revendication 4, **caractérisée en ce que** la structure de réception (32) comporte une armature principale (58) fixée sur le socle inclinable (46) et deux bras latéraux (60) qui s'étendent du côté opposé au socle inclinable (46) et qui forment ensemble une surface d'appui (62) prévue pour supporter des ailes de l'aéronef (12) dans une position de repos de l'aéronef (12).

10. Système (10) de production d'énergie électrique comportant :
- un aéronef (12),
- une génératrice (24) prévue pour produire de l'énergie électrique à partir des efforts appliqués par le vent sur l'aéronef (12) via un câble,
- au moins une suspente (26) prévue pour raccorder l'aéronef (12) à la génératrice (24) ;
**caractérisé en ce qu'**il comporte une plateforme de décollage et d'atterrissage (28) selon l'une quelconque des revendications précédentes.

## Patentansprüche

1. Start- und Landeplattform (28) für ein Luftfahrzeug (12) zur Erzeugung elektrischer Energie mittels eines Generators (24) und umfassend:
- einen feststehenden Träger (30),
- eine Aufnahmestruktur (32) für das Luftfahrzeug (12), die dazu vorgesehen ist, das Luftfahrzeug (12) aufzunehmen, und die mit dem feststehenden Träger (30) verbunden ist;
wobei die Aufnahmestruktur (32) mittels einer ausrichtbaren Platte (38) in Bezug auf den feststehenden Träger (30) schwenkbar gelagert ist, um die Positionierung der Aufnahmestruktur (32) in Abhängigkeit von der Ausrichtung des Windes zu ermöglichen,
und die Aufnahmestruktur (32) für das Luftfahrzeug (12) eine flexible Vorrichtung (33) umfasst, die zwischen Schenkeln (36) gespannt ist, die zu der Aufnahmestruktur (32) gehören, **dadurch gekennzeichnet, dass** diese flexible Vorrichtung (33) mindestens zwei gespannte elastische Elemente (54) umfasst, die beiderseits einer vertikalen Mittelebene der Aufnahmestruktur (32) angeordnet sind, um die Landung des Luftfahrzeugs (12) in der Aufnahmestruktur (32) dämpfen zu können.

2. Start- und Landeplattform (28) nach Anspruch 1, wobei die flexible Vorrichtung (33) luftdurchlässig ist.

3. Start- und Landeplattform (28) nach Anspruch 1 oder 2, **dadurch gekennzeichnet, dass** die ausrichtbare Platte (38) um eine im Wesentlichen vertikale Hauptdrehachse (A1) drehbar ist.

4. Start- und Landeplattform (28) nach einem der vorhergehenden Ansprüche, **dadurch gekennzeichnet, dass** sie einen neigbaren Sockel (46) umfasst, der die Aufnahmestruktur (32) trägt und der in Bezug auf die ausrichtbare Platte (38) um eine Schwenkachse (A2) schwenkbar gelagert ist.

5. Start- und Landeplattform (28) nach einem der vorhergehenden Ansprüche in Kombination mit Anspruch 4, **dadurch gekennzeichnet, dass** der neigbare Sockel (46) einen Durchgang (50) umfasst, der zur Führung einer Halteleine (26) vorgesehen ist, die dazu vorgesehen ist, an das Luftfahrzeug (12) in Richtung des Generators (24) angeschlossen zu werden.

6. Start- und Landeplattform (28) nach dem vorhergehenden Anspruch, **dadurch gekennzeichnet, dass** der neigbare Sockel (46) Folgendes umfasst:
- einen Hauptkörper, der den Durchgang (50) umfasst, und
- zwei Haltearme, die sich von dem Hauptkörper zu der ausrichtbaren Platte (38) hin erstrecken und die durch die Schwenkachse (A2) mit der ausrichtbaren Platte (38) verbunden sind.

7. Start- und Landeplattform (28) nach einem der vorhergehenden Ansprüche, genommen in Kombination mit Anspruch 4, **dadurch gekennzeichnet, dass** der Hauptkörper (48) des neigbaren Sockels (46) eine rechteckige Form aufweist, und dass jeder Schenkel (36) der Aufnahmestruktur (32) ein Ende umfasst, das an einer Ecke des Hauptkörpers (48) befestigt ist.

8. Start- und Landeplattform (28) nach Anspruch 1, **dadurch gekennzeichnet, dass** die zwei elastischen Elemente (54) zwischen den zwei Schenkeln (36) eines seitlichen Rahmens (56), beispielsweise in Form eines V, eines C oder eines U, gespannt sind.

9. Start- und Landeplattform (28) nach einem der vorhergehenden Ansprüche, genommen in Kombination mit Anspruch 4, **dadurch gekennzeichnet, dass** die Aufnahmestruktur (32) einen Hauptrahmen (58), der auf dem neigbaren Sockel (46) befestigt ist, und zwei seitliche Arme (60) umfasst, die sich auf der dem neigbaren Sockel (46) gegenüberliegenden Seite erstrecken und die zusammen eine Auflagefläche (62) bilden, die dazu vorgesehen ist, Flügel des Luftfahrzeugs (12) in einer Ruheposition des Luftfahrzeugs (12) zu tragen.

10. System (10) zur Erzeugung elektrischer Energie, umfassend:
- ein Luftfahrzeug (12),
- einen Generator (24), der dazu vorgesehen ist, aus den vom Wind auf das Luftfahrzeug (12) ausgeübten Kräften über ein Seil elektrische Energie zu erzeugen,
- mindestens eine Halteleine (26), die dazu vorgesehen ist, das Luftfahrzeug (12) mit dem Generator (24) zu verbinden;
**dadurch gekennzeichnet, dass** es eine Start- und Landeplattform (28) nach einem der vorhergehenden Ansprüche umfasst.

## Claims

1. Take-off and landing platform (28) for an aircraft (12) for the production of electrical energy by means of a generator (24) and comprising:
- a fixed support (30),
- a receiving structure (32) for the aircraft (12) which is designed to receive the aircraft (12) and which is connected to the fixed support (30);
wherein the receiving structure (32) is pivotally mounted relative to the fixed support (30) by means of an orientable plate (38) so as to allow the positioning of the receiving structure (32) as a function of the orientation of the wind,
and the receiving structure (32) for the aircraft (12) comprises a flexible device (33) which is stretched between branches (36) belonging to the receiving structure (32), **characterised in that** this flexible device (33) comprises at least two tensioned elastic elements (54) which are arranged on either side of a vertical median plane of the receiving structure (32) so as to be able to cushion the landing of the aircraft (12) in the receiving structure (32).

2. Take-off and landing platform (28) according to claim 1, wherein the flexible device (33) is air-permeable.

3. Take-off and landing platform (28) according to claim 1 or 2, **characterised in that** the orientable plate (38) is rotatable about a substantially vertical main axis (A1) of rotation.

4. Take-off and landing platform (28) according to any one of the preceding claims, **characterised in that** it comprises a tiltable base (46) which carries the receiving structure (32) and which is pivotally mounted relative to the orientable plate (38) about a pivot axis (A2).

5. Take-off and landing platform (28) according to any one of the preceding claims in combination with claim 4, **characterised in that** the tiltable base (46) comprises a passage (50) designed for guiding a suspension line (26) designed to be connected to the aircraft (12) towards the generator (24).

6. Take-off and landing platform (28) according to the preceding claim, **characterised in that** the tiltable base (46) comprises:
- a main body comprising the passage (50), and
- two holding arms which extend from the main body towards the orientable plate (38) and which are connected to the orientable plate (38) by the pivot axis (A2).

7. Take-off and landing platform (28) according to any one of the preceding claims taken in combination with claim 4, **characterised in that** the main body (48) of the tiltable base (46) has a rectangular shape, and **in that** each branch (36) of the receiving structure (32) comprises an end which is fixed to a corner of the main body (48).

8. Take-off and landing platform (28) according to claim 1, **characterised in that** the two elastic elements (54) are stretched between the two branches (36) of a lateral frame (56), for example in the shape of a V, a C, or a U.

9. Take-off and landing platform (28) according to any one of the preceding claims taken in combination with claim 4, **characterised in that** the receiving structure (32) comprises a main frame (58) fixed on the tiltable base (46) and two lateral arms (60) which extend on the side opposite the tiltable base (46) and which together form a support surface (62) designed to support wings of the aircraft (12) in a rest position of the aircraft (12).

10. Electrical energy production system (10) comprising:
- an aircraft (12),
- a generator (24) designed to produce electrical energy from the forces applied by the wind on the aircraft (12) via a cable,
- at least one suspension line (26) designed to connect the aircraft (12) to the generator (24);
**characterised in that** it comprises a take-off and landing platform (28) according to any one of the preceding claims.
